# EUROPÄISCHE PATENTSCHRIFT

(11) **EP 0 974 018 B1**
(45) Veröffentlichungstag und Bekanntmachung des Hinweises auf die Patenterteilung: **13.09.2000**
(21) Anmeldenummer: 98919221.6
(22) Anmeldetag: 04.04.1998
(51) Int. Cl.: F16H 61/02

(54) **ERHÖHUNG DER SPONTANEITÄT EINES AUTOMATGETRIEBES**
INCREASED-SPONTANEITY AUTOMATIC GEAR BOX
ACCROISSEMENT DE LA SPONTANEITE D'UNE TRANSMISSION AUTOMATIQUE

(30) Priorität: 10.04.1997 DE 19714852
(43) Veröffentlichungstag der Anmeldung: 26.01.2000
(73) Patentinhaber: ZF FRIEDRICHSHAFEN Aktiengesellschaft, 88038 Friedrichshafen (DE)
(72) Erfinder: POPP, Christian, D-88079 Kressbronn (DE); TENBROCK, Friedrich, D-88085 Langenargen (DE); ROSI, Hans-Jörg, D-88074 Meckenbeuren (DE)
(86) Internationale Anmeldenummer: EP9801979
(87) Internationale Veröffentlichungsnummer: WO9845626

(56) Entgegenhaltungen:
- EP-A- 0 341 631
- EP-A- 0 800 022
- DE-A- 3 625 156
- DE-A- 4 126 571
- DE-A- 4 311 886
- DE-A- 19 709 506

## Beschreibung

Die Erfindung betrifft ein Verfahren zur Erhöhung der Spontanität eines elektro-hydraulisch gesteuerten Automatgetriebes, bei dem eine Schaltung ausgeführt wird, indem während eine erste Kupplung öffnet, eine zweite Kupplung schließt.

Bei Automatgetrieben können die Schaltungen als Überschneidungsschaltungen, d. h., eine erste Kupplung öffnet und eine zweite Kupplung schließt, ausgeführt sein. Der Zustand und Druckverlauf der an der Schaltung beteiligten Kupplungen wird hierbei von einer elektronischen Getriebesteuerung über elektromagnetische Stellglieder bestimmt. Ein derartiges Verfahren zur Steuerung bzw. Regelung ist z. B. aus der DE-OS 42 40 621 bekannt.

Üblicherweise werden bei einem Automatgetriebe Schaltungen ausgelöst, wenn ein von einem Fahrer vorgebbarer Leistungswunsch, z. B. ein Fahrpedal-Wert, eine Schaltkennlinie eines Schaltkennfeldes überschreitet. Neben diesen mittels Fahrpedal ausgelösten Schaltungen hat ein Fahrer auch die Möglichkeit, zu jedem beliebigen Zeitpunkt manuelle Rückschaltungen auszulösen. So zeigt z. B. die DE-OS 43 11 886 eine Vorrichtung, durch die ein Fahrer mittels eines Wählhebels mit einer manuellen Gasse bzw. Schaltwippen am Lenkrad Schaltungen auslösen kann. In der Praxis kann nunmehr folgendes Problem auftreten: Während eines Überholvorganges erkennt der Fahrer, daß er den Gegenverkehr passieren lassen muß. Er wird sodann das Fahrpedal freigegeben. Überschreitet der Fahrpedal-Wert eine Hochschaltkennlinie, so wird als Folge hiervon das Automatgetriebe eine Hochschaltung ausführen. Erkennt der Fahrer während der Hochschaltung, daß nunmehr die Gegenfahrbahn frei ist, so wird er das Fahrpedal erneut betätigen. Das Automatgetriebe wird jedoch zuerst die Hochschaltung beenden, dann folgt eine Sperrzeit und dann erst wird das Automatgetriebe eine Rückschaltung ausführen. Das Problem besteht somit darin, daß zwischen der Leistungsanforderung des Fahrers und der Reaktion des Automatgetriebes hierauf eine entsprechend lange Zeit vergeht. Diese lange Reaktionszeit wird von vielen Fahrern als störend empfunden.

Als Verbesserung beschreibt z. B. die EP-OS 0 341 631 ein Verfahren zur Steuerung einer Überschneidungsschaltung, bei dem eine eingeleitete erste Schaltung nicht vollständig ausgeführt wird, wenn nach Ablauf einer Sperrzeit nach dem Schaltbefehl für die erste Schaltung ein Schaltbefehl für eine zweite Schaltung innerhalb einer Zeit erfolgt, in der die abschaltende Kupplung noch drehmomentführend ist und die zuschaltende Kupplung noch kein Drehmoment überträgt. Im Falle eines zweiten Schaltbefehls nach diesem Zeitpunkt, also zum Ende der ersten und während der zweiten Phase der Überschneidungsschaltung, wird zuerst die begonnene erste Schaltung vollständig ausgeführt, eine weitere Sperrzeit abgewartet und anschließend die Folgeschaltung durchgeführt .

Das Problem besteht somit darin, daß zwischen dem Fahrerwunsch bezüglich der Beschleunigung und der Reaktion des Automatgetriebes hierauf meistens ein großer zeitlicher Versatz besteht.

Der Erfindung liegt insofern die Aufgabe zugrunde, die Spontanität eines Automatgetriebes zu erhöhen.

Erfindungsgemäß wird die Aufgabe gelöst, indem wahrend einer Hochschaltung von einer ersten in eine zweite Übersetzungsstufe diese nicht vollständig beendet wird und ein Wechsel zu einer Rückschaltung in die erste Übersetzungsstufe unverzüglich erfolgt, wenn ein Abbruchkriterium erkannt wird. Das Abbruchkriterium wird hierbei aus einer vom Fahrer vorgebbaren Rückschaltungsanforderung bestimmt.

Die erfindungsgemäße Lösung bietet den Vorteil, daß das Verhalten des Automatgetriebes enger an den Leistungswunsch des Fahrers gekoppelt ist, d. h. im Unterschied zum Stand der Technik wird die Hochschaltung unverzüglich abgebrochen und unmittelbar auf die Rückschaltung gewechselt. Durch die engere Anbindung des Verhaltens des Automatgetriebes an den Leistungswunsch des Fahrers wird eine kürzere Reaktionszeit erreicht. Das Automatgetriebe wirkt spontaner.

In einer Ausgestaltung hierzu wird vorgeschlagen, daß während der Hochschaltung von der ersten in die zweite Übersetzungsstufe bei Erfülltsein des Abbruchkriteriums zusätzlich eine Zulässigkeit geprüft wird. Die Zulässigkeit ist dann erfüllt, wenn der aktuelle Getriebeeingangsdrehzahlwert innerhalb eines Drehzahlbereiches mit einem ersten und einem zweiten Grenzwert liegt. Hierbei ist der erste Grenzwert eine Funktion des Synchrondrehzahlwertes der ersten Übersetzungsstufe bzw. der zweite Grenzwert ist eine Funktion des Synchrondrehzahlwertes der zweiten Übersetzungsstufe. In einer Ausgestaltung hierzu wird weiterhin geprüft, ob der Verlauf des Gradienten der Getriebeeingangsdrehzahl innerhalb eines vorgegebenen Drehzahlbandes liegt. Diese beiden Ausgestaltungen tragen wesentlich zur Betriebssicherheit des Automatgetriebes bei, da Schaltungen nahe der Synchronpunkte nicht zugelassen werden und zusätzlich geprüft wird, ob die Hochschaltung fehlerfrei abläuft.

In einer weiteren Ausgestaltung wird vorgeschlagen, daß bei Ausgabe des Abschaltbefehls für die erste Kupplung eine Zeitstufe gestartet wird, die bis zu einer maximalen Zeit läuft, wobei jedem Wert der Zeitstufe eine Reduktionszeit zugeordnet ist, und in Ausgestaltung hierzu wird vorgeschlagen, daß eine Schnellfüllzeit der bei der Rückschaltung jetzt wieder zuschaltenden ersten Kupplung in Abhängigkeit der Reduktionszeit verändert wird. Hierdurch wird der Vorteil erzielt, daß die bei der Rückschaltung wieder zuschaltende erste Kupplung komfortabler schließt. Schaltrücke werden somit vermieden.

In den Zeichnungen ist ein bevorzugtes Ausführungsbeispiel dargestellt.

Es zeigen:
- Fig. 1: ein System-Schaubild;
- Fig. 2: eine Kupplungslogik und
- Fig. 3: ein Zeit-Diagramm.

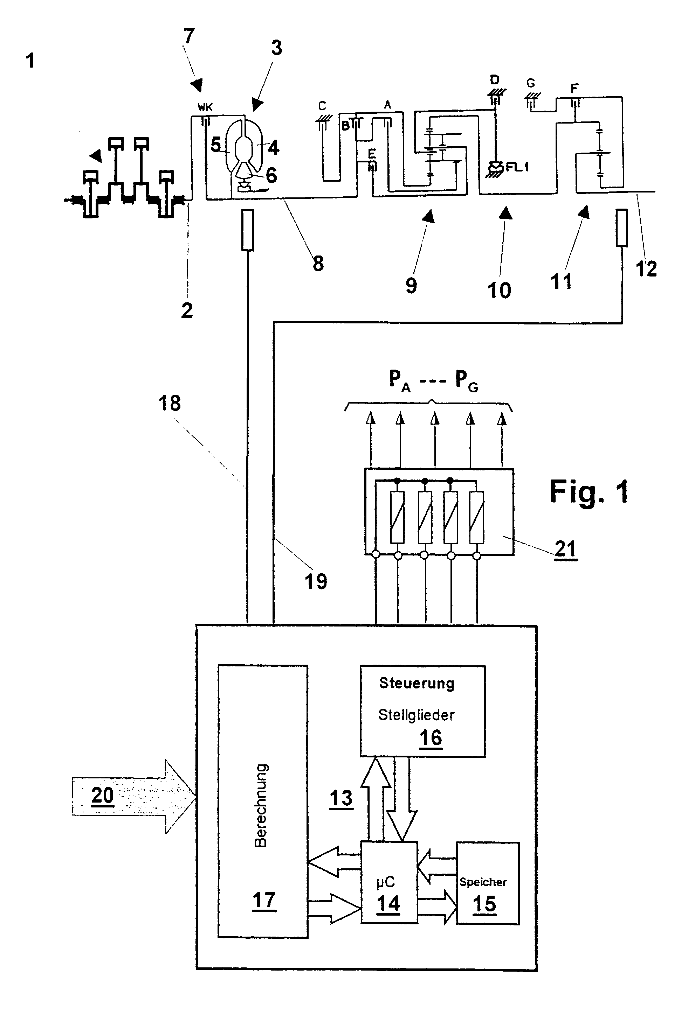

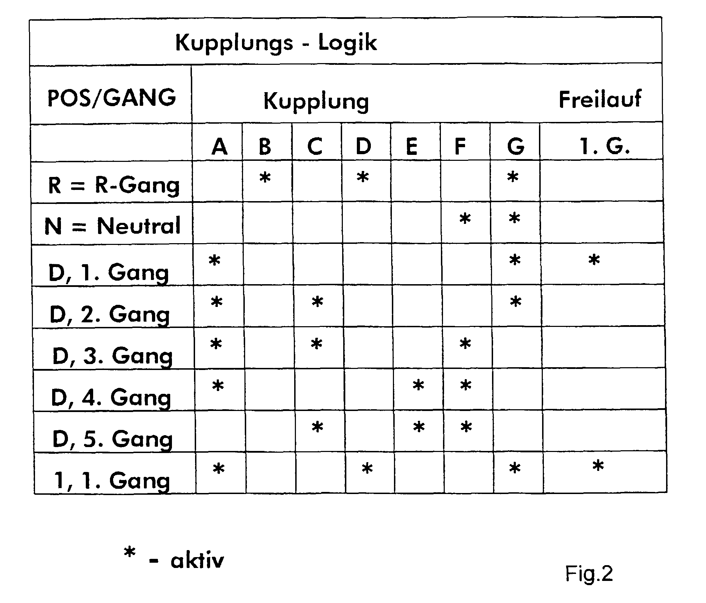

Fig. 1 zeigt ein System-Schaubild eines Automatgetriebes. Dieses besteht aus dem eigentlichen mechanischen Teil, einem hydrodynamischen Wandler 3, einem hydraulischen Steuergerät 21 und einer elektronischen Getriebesteuerung 13. Angetrieben wird das Automatgetriebe von einer Antriebseinheit 1, vorzugsweise Brennkraftmaschine, über eine Antriebswelle 2. Diese ist mit dem Pumpenrad des hydrodynamischen Wandlers 3 drehfest verbunden. Bekanntermaßen besteht der hydrodynamische Wandler 3 aus einem Pumpenrad 4, einem Turbinenrad 5 und einem Leitrad 6. Parallel zum hydrodynamischen Wandler 3 ist eine Wandlerkupplung 7 angeordnet. Die Wandlerkupplung 7 und das Turbinenrad 5 führen auf eine Turbinenwelle 8. Bei betätigter Wandlerkupplung 7 hat die Turbinenwelle 8 die gleiche Drehzahl wie die Antriebswelle 2.
Der mechanische Teil des Automatgetriebes besteht aus Kupplungen und Bremsen A bis G, einem Freilauf 10 (FL1), einem Ravigneaux-Satz 9 und einem nachgeordneten Planetenradsatz 11. Der Abtrieb geschieht über die Getriebeausgangswelle 12. Diese führt auf ein nicht dargestelltes Differential, welches über zwei Achshalbwellen die Antriebsräder eines Fahrzeuges antreiben. Über eine entsprechende Kupplungs-/Brems-Kombination wird eine Gangstufe des Automatgetriebes festgelegt. Die Zuordnung der Kupplungslogik zur Gangstufe ist aus der Fig. 2 ersichtlich. So wird z. B. bei einer Hochschaltung von der zweiten Gangstufe in die dritte Gangstufe wird gemäß dieser Tabelle die Bremse G geöffnet und die Kupplung F geschlossen. Wie aus der Tabelle weiter ersichtlich ist, sind die Schaltungen von der zweiten bis zur fünften Übersetzungsstufe als Überschneidungsschaltungen ausgeführt. Da der mechanische Teil für das weitere Verständnis der Erfindung nicht relevant ist, wird auf eine detaillierte Beschreibung verzichtet.

Die elektronische Getriebesteuerung 13 wählt in Abhängigkeit der Eingangsgrößen 18 bis 20 eine entsprechende Fahrstufe aus. Über das hydraulische Steuergerät 21, in dem sich elektromagnetische Stellglieder befinden, aktiviert sodann die elektronische Getriebesteuerung 13 eine entsprechende Kupplungs-/Brems-Kombination. Während der Schaltübergänge bestimmt die elektronische Getriebesteuerung 13 den Druckverlauf der an der Schaltung beteiligten Kupplungen/Bremsen. Von der elektronischen Getriebesteuerung 13 sind in stark vereinfachter Form als Blöcke dargestellt: Micro-Controller 14, Speicher 15, Funktionsblock Steuerung Stellglieder 16 und Funktionsblock Berechnung 17. Im Speicher 15 sind die getrieberelevanten Daten abgelegt. Getrieberelevante Daten sind z. B. Programme, Schaltkennlinien und fahrzeugspezifische Kennwerte als auch Diagnosedaten. Üblicherweise ist der Speicher 15 als EPROM, EEPROM oder als gepufferter RAM ausgeführt. Im Funktionsblock Berechnung 17 werden die für einen Schaltungsverlauf relevanten Daten berechnet. Der Funktionsblock Steuerung Stellglieder 16 dient der Ansteuerung der sich im hydraulischen Steuergerät 21 befindenden Stellglieder.
Die elektronische Getriebesteuerung 13 erhält Eingangsgrößen 20. Eingangsgrößen 20 sind z. 3. eine den Leistungswunsch des Fahrers repräsentierende Größe, wie Fahrpedalwert/Drosselklappenstellung oder manuell angeforderte Schaltungen, das Signal des von der Brennkraftmaschine abgegebenen Moments, die Drehzahl bzw. Temperatur der Brennkraftmaschine usw. Üblicherweise werden die Brennkraftmaschinen-spezifischen Daten von einem Motorsteuergerät bereitstellt. Dieses ist in Fig. 1 nicht dargestellt. Als weitere Eingangsgrößen erhält die elektronische Getriebesteuerung 13 die Drehzahl der Turbinenwelle 18 und die Drehzahl der Getriebeausgangswelle 19.

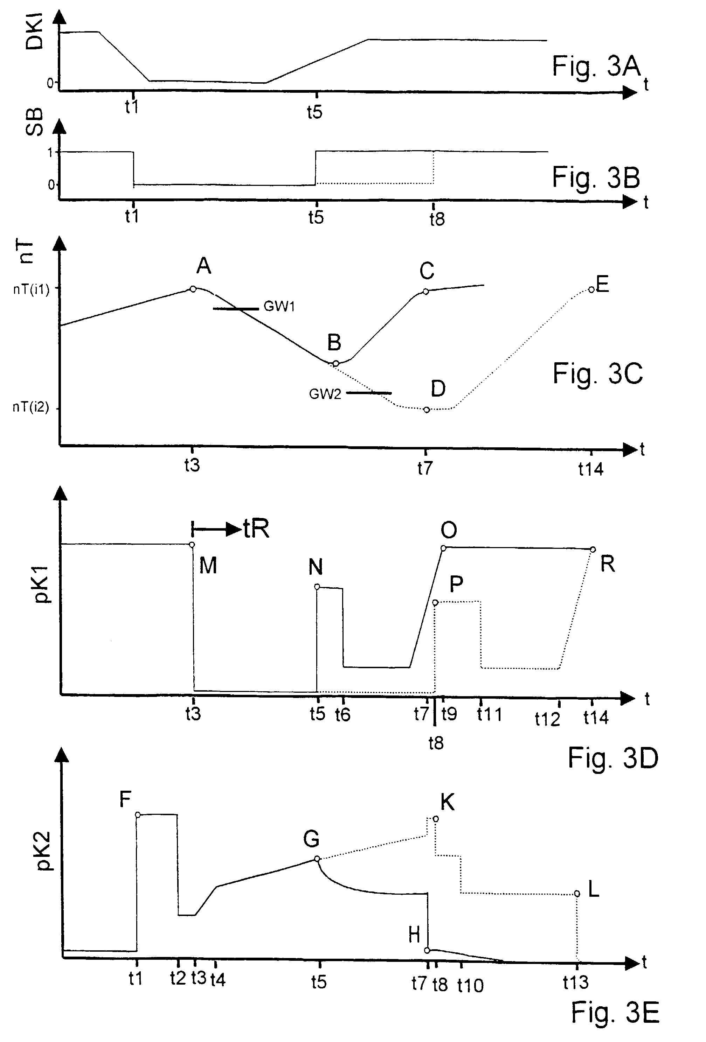

Fig. 3 zeigt ein Zeit-Diagramm für eine Hochschaltung mit anschließender Rückschaltung. Die Fig. 3 besteht aus den Teil-Fig. 3A bis 3E. Hierbei zeigen jeweils über der Zeit: Fig. 3A den Signalverlauf einer den Leistungswunsch des Fahrers repräsentierenden Größe, hier Drosselklappeninformation DKI, Fig. 3B den Signalverlauf Schaltbefehl SB, Fig. 3C den Drehzahlverlauf der Getriebeeingangswelle nT, Fig. 3D den Druckverlauf der ersten Kupplung pKl und Fig. 3E den Druckverlauf der zweiten Kupplung pK2. In den Fig. 3B bis 3E sind jeweils zwei Beispiele dargestellt, wobei das erste Beispiel einen Verlauf gemäß dem Stand der Technik darstellt (gestrichelte Linie) und das zweite Beispiel eine Lösung gemäß der Erfindung (durchgezogene Linie). Für das erste Beispiel sind dies in der Fig. 3C der Kurvenzug mit den Punkten A, D und E. In Fig. 3D ist dies der Kurvenzug mit den Punkten M, P und R. In Fig. 3E ist dies der Kurvenzug mit den Punkten F, G, K und L. Für das zweite Beispiel ist dies in Fig. 3C der Kurvenzug mit den Punkten A, B und C. In Fig. 3D ist dies der Kurvenzug mit den Punkten M, N, 0 und R. In Fig. 3E ist dies der Kurvenzug mit den Punkten F, G und H.
Den Zeit-Diagrammen der Fig. 3 liegt der Fall zugrunde, daß ein Fahrer während eines Überholvorganges erkennt, daß er den Gegenverkehr passieren lassen muß. Der Fahrer wird sodann unmittelbar das Fahrpedal freigeben. Es wird davon ausgegangen, daß durch die Freigabe des Fahrpedals eine Hochschaltkennlinie überschritten wird. Die Hochschaltung wird als Zug- oder Schub-Hochschaltung ausgeführt. Nachdem die Gegenfahrbahn jetzt frei ist, wird der Fahrer versuchen, erneut zu überholen. Als Folge hiervon wird er das Fahrpedal sehr stark betätigen. Es wird hierbei davon ausgegangen, daß durch die Betätigung des Fahrpedals eine Rückschaltkennlinie überschritten wird, d. h., die Rückschaltung wird als Zug-Rückschaltung ausgeführt. Die Unterscheidung Zug/Schub wird üblicherweise anhand eines Kennfeldes getroffen. Ein derartiges Kennfeld ist z. B. aus der DE-OS 44 17 477 bekannt. Es wird weiter davon ausgegangen, daß das Abbruchkriterium zulässig ist, d. h., ein aktueller Getriebeeingangsdrehzahlwert nT liegt innerhalb eines Drehzahlbereiches. Der Drehzahlbereich wird durch einen ersten und zweiten Grenzwert definiert. Es wird weiter davon ausgegangen, daß der Gradient der Getriebeeingangsdrehzahl nT innerhalb eines vorgegebenen Drehzahlbandes liegt, d. h. die Schaltung läuft fehlerfrei ab.

### Zum ersten Beispiel:

Zum Zeitpunkt t1 überschreitet der DKI-Wert die Hochschaltkennlinie. Die elektronische Getriebesteuerung wird sodann einen Hochschaltbefehl ausgeben. Dies ist in Fig. 3B dargestellt, indem der Signalverlauf SB sich von Eins nach Null ändert. Ebenfalls zum Zeitpunkt t1 wird die zweite Kupplung K2 bis zum Zeitraum t2 mit einem Schnellfülldruck, Druckniveau entspricht hierbei dem Punkt F, beaufschlagt. Im Zeitraum t2 bis t3 folgt die Füllausgleichsphase für diese Kupplung. Zum Zeitpunkt t3 beginnt für die zweite Kupplung K2 eine Druckerhöhung gemäß einer Rampenfunktion. Während dieser Rampe beginnt die zweite Kupplung das Moment von der ersten Kupplung zu übernehmen, d. h., die erste Kupplung kann zum Zeitpunkt t3 abgeschaltet werden. Die Lastübernahme der zweiten Kupplung K2 von der ersten Kupplung K1 zeigt sich in Fig. 3C am Punkt A, also dem Synchronpunkt nT(i1) der ersten Übersetzungsstufe, in dem der Getriebeeingangsdrehzahl-Verlauf nT sich in Richtung des Synchronpunktes nT(i2) der zweiten Übersetzungsstufe ändert. Zum Zeitpunkt t4 hat die zweite Kupplung K2 die Last vollständig übernommen. Im Zeitpunkt t5 übersteigt der DKI-Wert eine Rückschalzkennlinie. Gemäß dem Stand der Technik wird nun zuerst die Hochschaltung vollständig beendet. Diese ist zum Zeitpunkt t7 beendet, da die Getriebeeingangsdrehzahl nT den Synchronpunkt nT(i2) der zweiten Übersetzungsstufe, Punkt D, erreicht. Nach Abschluß der Hochschaltung erfolgt eine Sperrzeit. Die Sperrzeit ist üblicherweise deswegen notwendig, weil gewährleistet sein muß, daß die beim Hochschaltvorgang abschaltende erste Kupplung K1 vollständig entleert ist. Ist dies nicht der Fall, so macht sich die Schnellfüllung der jetzt wieder zuschaltenden ersten Kupplung K1 bei der Rückschaltung negativ in Form eines Schaltrucks bemerkbar. Nach Ablauf der Sperrzeit wird zum Zeitpunkt t8 die Rückschaltung eingeleitet, indem die elektronische Getriebesteuerung den Rückschaltbefehl ausgibt. Der Verlauf des Signals SB in Fig. 3B ändert sich von Null nach Eins. Gleichzeitig wird die erste Kupplung bis zum Zeitraum tll mit dem Schnellfülldruck beaufschlagt. Danach folgt bis zum Zeitraum t12 für die erste Kupplung K1 die Füllausgleichsphase, gefolgt von einer Druckaufbaurampe, die bei t14, Punkt R, endet. Zeitgleich zum Zeitpunkt t8 wird die zweite Kupplung K2 bis zum Zeitraum t13 in mehreren Stufen abgeschaltet. Als Folge hiervon wird sich die Getriebeeingangsdrehzahl nT vom Drehzahlniveau des Punktes D in Richtung des Synchronpunktes nT(i1) der ersten Übersetzungsstufe, dies entspricht in Fig. 3C dem Punkt E, ändern. Zum Zeitpunkt t14 ist die Rückschaltung beendet.

### Zum zweiten Beispiel:

Im Zeitraum t1 bis t5 läuft das Verfahren, wie zuvor beschrieben, ab. Zum Zeitpunkt t5, also mit Ausgabe des Schaltbefehls durch die elektronische Getriebesteuerung, wird sofort die erste Kupplung mit einem zeitlich reduzierten Schnellfülldruck, Druckniveau entsprechend dem Punkt N, bis zum Zeitpunkt t6 beaufschlagt. Danach folgt die Füllausgleichsphase und eine Druckrampe. Die Druckrampe ist im Punkt O, Zeitpunkt t9, beendet. Zum Zeitpunkt t5 wird das Druckniveau pK2 der zweiten Kupplung vom Punkt G verringert, bis diese dann zum Zeitpunkt t7 vollständig abgeschaltet wird. Als Folge der Verringerung des Druckniveaus der zweiten Kupplung pK2 wird sich der Verlauf der Getriebeeingangsdrehzahl im Punkt B ändern. Die Getriebeeingangsdrehzahl nT wird sich in Richtung des Synchronpunktes der ersten Übersetzungsstufe nT(i1), also dem Punkt O in Fig. 3C, nähern. Zum Zeitpunkt t7 hat diese den Synchronpunkt erreicht. Damit ist die Rückschaltung beendet.

In einer Ausgestaltung der Erfindung wird vorgeschlagen, daß mit Abschalten der ersten Kupplung K1, dies entspricht in Fig. 3D dem Zeitpunkt t3, eine Zeitstufe tR gestartet wird. Diese Zeitstufe läuft bis zu einer maximalen Zeit. Jedem Wert der Zeitstufe ist eine Reduktionszeit zugeordnet. Die Schnellfüllzeit tSF der bei der Rückschaltung jetzt wieder zuschaltenden ersten Kupplung K1, also der Zeitraum t5 bis t6, wird in Abhängigkeit dieser Reduktionszeit verändert. Ein kleiner Wert der Zeitstufe tR bewirkt eine kürzere Schnellfüllung. Hierdurch wird gewährleistet, daß die noch nicht vollständig entleerte erste Kupplung K1 während des Zuschaltvorganges nicht zu lange befüllt wird.

In Fig. 3C ist ein erster (GW1) und ein zweiter (GW2) Grenzwert eingezeichnet. Das Abbruchkriterium ist dann zulässig, wenn die Getriebeeingangsdrehzahl nT innerhalb des Drehzahlbereiches zwischen GW1 und GW2 liegt. Der erste Grenzwert GW1 ist eine Funktion des Synchrondrehzahlwertes der ersten Übersetzungsstufe. Der zweite Grenzwert GW2 ist eine Funktion des Synchrondrehzahiwertes der zweiten Übersetzungsstufe. Dies kann z. 3. gemäß folgender Formel ausgeführt sein:

| | |
|---|---|
| GW1 | nT(i1) - Offset |
| GW2 | nT(i2) + Offset |
| GW1 | erster Grenzwert |
| GW2 | zweiter Grenzwert |
| nT(i1) | Synchrondrehzahl der ersten Übersetzungsstufe |
| nT(i2) | Synchrondrehzahl der zweiten Übersetzungsstufe |
| Offset | absoluter Drehzahlwert, z. B. 200 1/min, oder relativ zur Differenz nT(i2) - nT(i1) |

Gemäß dem Stand der Technik, also entsprechend dem ersten Beispiel, ist die Hochschaltung mit anschließender Rückschaltung zum Zeitpunkt t14 beendet. Gemäß der Erfindung ist dieselbe Schaltung, entsprechend dem zweiten Beispiel, bereits zum Zeitpunkt t7 beendet. Dieser Zeitraum t14 zu t7 macht sich deutlich als Zeitvorteil bemerkbar, d. h., die Reaktion des Automatgetriebes ist enger an den Leistungswunsch des Fahrers gekoppelt. Das Getriebe wirkt dadurcn spontaner.

### Bezugszeichen

- 1: Antriebseinheit
- 2: Antriebswelle
- 3: hydrodynamischer Wandler
- 4: Pumpenrad
- 5: Turbinenrad
- 6: Leitrad
- 7: Wandlerkupplung
- 8: Turbinenwelle
- 9: Ravigneaux-Satz
- 10: Freilauf FL1
- 11: Planetenradsatz
- 12: Getriebeausgangswelle
- 13: elektronische Getriebesteuerung
- 14: Micro-Controller
- 15: Speicher
- 16: Funktionsblock Steuerung Stellglieder
- 17: Funktionsblock Berechnung
- 18: Turbinendrehzahl-Signal
- 19: Getriebeausgangsdrehzahl-Signal
- 20: Eingangsgrößen
- 21: hydraulisches Steuergerät

## Patentansprüche

1. Verfahren zur Erhöhung der Spontanität eines elektro-hydraulisch gesteuerten Automatgetriebes, bei dem eine Schaltung ausgeführt wird, indem während eine erste Kupplung (K1) öffnet, eine zweite Kupplung (K2) schließt, dadurch **gekennzeichnet,** daß während einer Hochschaltung von einer ersten (i1) in eine zweite (i2) Übersetzungsstufe diese nicht vollständig beendet wird und ein Wechsel zu einer Rückschaltung in die erste (i1) Übersetzungsstufe erfolgt, wenn ein Abbruchkriterium erkannt wird, wobei das Abbruchkriterium aus einer von einem Fahrer vorgebbaren Rückschaltungsanforderung bestimmt wird.

2. Verfahren nach Anspruch 1, dadurch **gekennzeichnet,** daß während der Hochschaltung von der ersten (i1) in die zweite (i2) Übersetzungsstufe bei Erfülltsein des Abbruchkriteriums zusätzlich eine Zulässig. keit geprüft wird, die Zulässigkeit dann erfüllt ist, wenn ein aktueller Getriebeeingangsdrehzahlwert (nT(t)) innerhalb eines Drehzahlbereiches mit einem ersten (GW1) und einem zweiten (GW2) Grenzwert (GW1 > nT(t) > GW2) liegt, wobei der erste Grenzwert (GW1) eine Funktion des Synchrondrehzahlwertes der ersten Übersetzungsstufe (GW1 = f(nT(i1)) darstellt bzw. der zweite Grenzwert eine Funktion des Synchrondrehzahlwertes der zweiten Übersetzungsstufe (GW2 = f(nT(i2)) darstellt.

3. Verfahren nach Anspruch 2, dadurch **gekennzeichnet,** daß zusätzlich geprüft wird, ob der Verlauf des Gradienten der Getriebeingangsdrehzahl (nT(Grad)) innerhalb eines vorgegebenen Drehzahlbandes liegt.

4. Verfahren nach Anspruch 1, 2 oder 3, dadurch **gekennzeichnet**, daß bei Ausgabe des Abschaltbefehls für die erste Kupplung (K1) eine Zeitstufe (tR) gestartet wird, die bis zu einer maximalen Zeit (tMAX) läuft, wobei jedem Wert der Zeitstufe (tR) eine Reduktionszeit zugeordnet ist.

5. Verfahren nach Anspruch 4, dadurch **gekennzeichnet,** daß eine Schnellfüllzeit (tSF) der bei der Rückschaltung jetzt wieder zuschaltenden Kupplung (K1) in Abhängigkeit der Reduktionszeit verändert wird.

6. Verfahren nach Anspruch 5, dadurch **gekennzeichnet,** daß die Schnellfüllzeit sich in dem Sinne verändert, daß ein kleiner Wert der Zeitstufe (tR) eine kurze Schnellfüllzeit (tSF) bewirkt.

7. Verfahren nach einem der Ansprüche 2 bis 6, dadurch **gekennzeichnet,** daß bei einem Wechsel von Schub nach Zug während der Hochschaltung von der ersten (i1) in die zweite (i2) Übersetzungsstufe eine Zeitstufe (dt) beginnt, bei der Prüfung der Zulässigkeit zusätzlich der Stand der Zeitstufe abgefragt wird und der Wechsel auf die Rückschaltung duchgeführt wird, wenn der Stand der Zeitstufe einen Grenzwert (GW) übersteigt (dt > GW).

## Claims

1. Method of increasing the spontaneity of an electrohydraulically controlled automatic transmission, in which a shift operation is effected in that, while a first clutch (K1) opens, a second clutch (K2) closes, characterized in that during an upshift from a first (i1) to a second (i2) transmission step said upshift is not fully completed and a change to a downshift to the first (i1) transmission step is effected when an abort criterion is recognized, wherein the abort criterion is determined from a downshift requirement selectable by a driver.

2. Method according to claim 1, characterized in that during the upshift from the first (i1) to the second (i2) transmission step, when the abort criterion is met, an acceptability is additionally checked, the acceptability is met when an actual transmission input speed value (nT(t)) lies within a speed range having a first (GW1) and a second (GW2) limit value (GW1 > nT(t) > GW2), wherein the first limit value (GW1) is a function of the synchronous speed value of the first transmission step (GW1 = f(nT(i1)) and/or the second limit value is a function of the synchronous speed value of the second transmission step (GW2 = f(nT(i2)).

3. Method according to claim 2, characterized in that it is additionally checked whether the characteristic of the gradient of the transmission input speed (nT(Grad)) lies within a preselected speed band.

4. Method according to claim 1, 2 or 3, characterized in that upon output of the tripping command for the first clutch (K1) a timer module (tR) is started, which operates up to a maximum time (tMAX), wherein a reduction time is associated with each value of the timer module (tR).

5. Method according to claim 4, characterized in that a fast-fill time (tSF) of the clutch (K1), which then re-engages upon the downshift, is varied in dependence upon the reduction time.

6. Method according to claim 5, characterized in that the fast-fill time varies in the sense that a low value of the timer module (tR) gives rise to a short fast-fill time (tSF).

7. Method according to one of claims 2 to 6, characterized in that upon a change from push to pull during the upshift from the first (i1) to the second (i2) transmission step a timer module (dt) begins, during the acceptability check the reading of the timer module is scanned and the change to the downshift is effected when the reading of the timer module exceeds a limit value (GW) (dt > GW).

## Revendications

1. Procédé pour l'augmentation de la spontanéité d'une transmission automatique à commande électro-hydraulique, dans lequel un changement de vitesses s'effectue avec un premier embrayage (K1) qui s'ouvre tandis qu'un deuxième embrayage (K2) se ferme, **caractérisé** en ce que, pendant un changement de vitesses enclenchant une vitesse supérieure en passant d'un premier (i1) à un deuxième rapport de transmission (i2), celui-ci n'est pas entièrement achevé, et en ce qu'un passage vers une rétrogradation vers le premier rapport de transmission (i1) s'effectue lorsqu'un critère d'interruption est reconnu, ce critère d'interruption étant défini par une demande de rétrogradation faite par un conducteur et pouvant être prédéfinie.

2. Procédé selon la revendication 1, **caractérisé** en ce que, pendant le changement de vitesses enclenchant une vitesse supérieure en passant d'un premier (i1) à un deuxième rapport de transmission (i2), si le critère d'interruption est satisfait, une autorisation est en outre testée, cette autorisation étant ensuite accordée si une valeur actuelle de vitesse de rotation initiale de la transmission (nT(t)) se trouve dans une plage de vitesses de rotation définie par une première (GW1) et une deuxième valeur limite (GW2), (GW1 > nT(t) > GW2), la première valeur limite (GW1) représentant une fonction de la valeur de la vitesse de rotation synchrone du premier rapport de transmission (GW1 = f(nT(i1)), la deuxième valeur limite représentant respectivement une fonction de la valeur de la vitesse de rotation synchrone du deuxième rapport de transmission (GW2 = f(nT(i2)).

3. Procédé selon la revendication 2, **caractérisé** en ce qu'en outre, on teste si la variation du gradient de la vitesse de rotation initiale de la transmission (nT(Grad)) se trouve dans une plage de vitesses de rotation prédéfinie.

4. Procédé selon la revendication 1, 2 ou 3, **caractérisé** en ce que, en donnant l'ordre de débrayage pour le premier embrayage (K1), une temporisation (tR), qui s'écoule jusqu'à un temps maximal (tMAX), est lancée, un temps de réduction étant affecté à chaque valeur de la temporisation (tR).

5. Procédé selon la revendication 4, **caractérisé** en ce qu'un temps de remplissage rapide (tSF) de l'embrayage (K1) embrayant à nouveau à ce moment de la rétrogradation varie en fonction du temps de réduction.

6. Procédé selon la revendication 5, **caractérisé** en ce que le temps de remplissage rapide varie dans le sens où une valeur inférieure de la temporisation (tR) entraîne un temps de remplissage (tSF) plus court.

7. Procédé selon l'une des revendications 2 à 6, **caractérisé** en ce que, lors d'un passage de la poussée vers la traction pendant le changement de vitesses enclenchant une vitesses supérieure en passant d'un premier (i1) à un deuxième rapport de transmission (i2), une temporisation (dt) commence, et en ce que, lors du test de l'autorisation, l'état de la temporisation est interrogé et le passage vers la rétrogradation s'effectue quand l'état de la temporisation dépasse une valeur limite (GW), (dt > GW).
